# EUROPEAN PATENT APPLICATION

(11) **EP 2 043 364 A2**
(43) Date of publication of application: **01.04.2009**
(21) Application number: 08153604.7
(22) Date of filing: 28.03.2008
(51) Int. Cl.: H04N 5/445

(54) **Method for providing graphical user interface and video apparatus using the same**

(30) Priority: 28.09.2007 KR 20070098082
(71) Applicant: Samsung Electronics Co., Ltd., Suwon-si, Gyeonggi-do 442-742 (KR)
(72) Inventor: Han, Jea-hee, Gyeonggi-do (KR)
(74) Representative: Rooney, John-Paul

(57) **Abstract**

A method for providing a GUI and a video apparatus using the method are provided. The method for providing a GUI includes providing a higher level menu screen in the form of a first keypad, and providing a lower level menu screen in the form of a second keypad.

## Description

### BACKGROUND OF THE INVENTION

### 1. Field of the Invention

Apparatuses and methods consistent with the present invention relate to providing a graphical user interface (GUI), and more particularly, to providing a GUI in which a user can input commands to operate a video apparatus and adjust configuration settings of the video apparatus.

### 2. Description of the Related Art

Video apparatuses provide useful information, along with entertainment, to users. Most video apparatuses are operated by commands received from users through graphical user interfaces (GUIs).

As the functions of video apparatuses have multiplied in recent years, GUIs have become more complicated. Accordingly, users are required to search for menus through complicated GUIs in order to input commands to operate video apparatuses, which is inconvenient to users. Additionally, users are required to search for menus through GUIs by moving cursors, which also increases user inconvenience.

Therefore, there is a need for methods whereby users may navigate GUIs more conveniently and with greater ease.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method for providing a graphical user interface (GUI) and a video apparatus using a method wherein a user can navigate the GUI more intuitively, more easily and more conveniently, using a user input device such as a remote controller.

According to an aspect of the present invention, there is provided a method for providing a graphical user interface (GUI), the method comprising providing a higher level menu screen in the form of a first keypad; and providing a lower level menu screen pertaining to the higher level menu screen in the form of a second keypad.

The form of the second keypad may be consistent with the form of the first keypad.

The form of the first keypad and the form of the second keypad may be consistent with one of a keypad on a remote control device related to a video apparatus which provides the higher level menu screen and the lower level menu screen, and a keypad on the video apparatus.

The higher level menu screen may comprise keys displayed on the first keypad, and higher level menu items corresponding to the keys and the higher level menu items may be each displayed adjacent to the corresponding keys. The lower level menu screen may comprise keys displayed on the second keypad and lower level menu items corresponding to the keys, and the lower level menu items may be each displayed adjacent to the corresponding keys.

The keys may comprise number keys.

The higher level menu screen may comprise higher level menu items corresponding to only a portion of the keys displayed on the first keypad.

According to another aspect of the present invention, there is provided a video apparatus comprising a graphical user interface (GUI) generator which generates a menu screen combined with video to be displayed on a display; and a controller which controls the GUI generator to generate a higher level menu screen in the form of a first keypad and to generate a lower level menu screen pertaining to the higher level menu screen in the form of a second keypad.

The form of the second keypad may be consistent with the form of the first keypad.

The form of the first keypad and the form of the second keypad may be consistent with one of a keypad on a remote control device related to the video apparatus, and a keypad on the video apparatus.

The higher level menu screen may comprise keys displayed on the first keypad and higher level menu items corresponding to the keys, and the higher level menu items may be each displayed adjacent to the corresponding keys. The lower level menu screen may comprise keys displayed on the second keypad and lower level menu items corresponding to the keys, and the lower level menu items may be each displayed adjacent to the corresponding keys.

The keys may comprise number keys. The video apparatus may be a broadcast receiving apparatus which receives a broadcast to provide a user with the received broadcast.

The higher level menu screen may comprise higher level menu items corresponding to only a portion of the keys displayed on the first keypad.

According to another aspect of the present invention, there is provided a method for providing a graphical user interface (GUI), the method comprising generating a menu screen in the form of a keypad on which keys and menu items corresponding to the keys are displayed, the menu items being displayed adjacent to the corresponding keys; and combining the menu screen with video to be displayed on a display.

The form of the keypad may be consistent with one of a keypad on a remote control device related to a video apparatus which provides a user with the menu screen, and a keypad on the video apparatus.

The form of the keypad may be consistent with a keypad on a remote control device related to a video apparatus which provides a user with the menu screen. No text printed on the remote control device, except for those associated with the keys on the keypad, may be displayed on the menu screen.

The form of the keypad may be consistent with a keypad on a remote control device related to a video apparatus which provides a user with the menu screen. The keys displayed on the menu screen may be a portion of the keys on the remote control device.

According to another aspect of the present invention, there is provided a video apparatus comprising a graphical user interface (GUI) generator which generates a menu screen combined with video to be displayed on a display; and a controller which controls the GUI generator to generate a menu screen. The menu screen may be in the form of a keypad on which keys and menu items corresponding to the keys are displayed, and the menu items may be displayed adjacent to the corresponding keys.

The form of the keypad may be consistent with one of a keypad on a remote control device related to the video apparatus, and a keypad on the video apparatus.

The form of the keypad may be consistent with a keypad on a remote control device related to the video apparatus. No text printed on the remote control device, except for those associated with the keys on the keypad, may be displayed on the menu screen.

The form of the keypad may be consistent with a keypad on a remote control device related to the video apparatus, and the keys displayed on the menu screen may be a portion of the keys on the remote control device. The video apparatus may be a broadcast receiving apparatus which receives a broadcast to provide a user with the received broadcast.

According to another aspect of the present invention, there is provided a method for providing a graphical user interface (GUI), the method comprising displaying a first menu comprising numbers and menu items corresponding to the numbers; and if a predetermined number is input, selecting a menu item corresponding to the input number.

The selecting may further comprise displaying a second menu pertaining to the selected menu item corresponding to the input number, around the first menu.

The second menu may comprise numbers and menu items corresponding to the numbers.

The second menu may be displayed to the right of the first menu.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram showing a DTV according to an exemplary embodiment of the present invention;
FIG. 2 is a flowchart showing a method for providing a menu screen having a shape consistent with a remote controller, according to an exemplary embodiment of the present invention;
FIG. 3 is a view showing in detail the remote controller exemplarily shown in FIG. 1;
FIGS. 4A to 4C are diagrams explaining in detail the method for providing a menu screen exemplarily shown in FIG. 2;
FIGS. 5A and 5B are diagrams explaining in detail the method for providing a menu screen exemplarily shown in FIG. 2;
FIG. 6 is a flowchart showing a method for providing a menu screen, according to another exemplary embodiment of the present invention; and
FIGS. 7A to 7C are diagrams explaining in detail the method for providing a menu screen exemplarily shown in FIG. 6.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

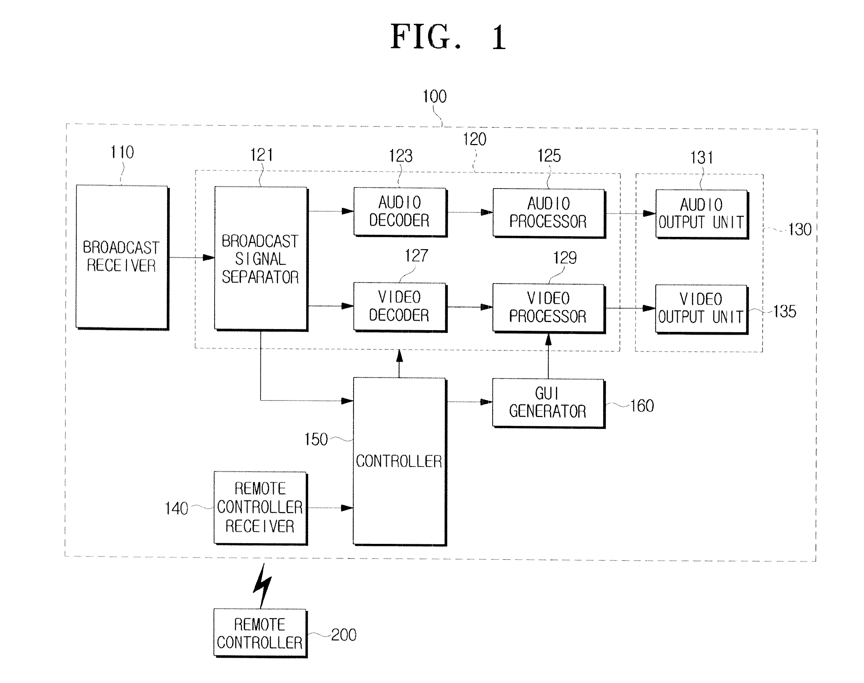

FIG. 1 is a block diagram showing a DTV 100 according to an exemplary embodiment of the present invention. In order to facilitate understanding of the present invention, FIG. 1 shows a remote controller 200 together with digital television (DTV) 100.

The DTV 100 is used as a video apparatus, which receives a broadcast program and provides a user with the received broadcast program. Additionally, the DTV 100 provides the user with a graphical user interface (GUI) that may be operated using the remote controller 200, and performs user commands input through the GUI. The shape of the GUI provided by the DTV 100 may be consistent with the remote controller 200.

The DTV 100 of FIG. 1 comprises a broadcast receiver 110, a broadcast processor 120, a broadcast output unit 130, a remote controller receiver 140, a controller 150 and a GUI generator 160.

The broadcast signal receiver 110 tunes to a broadcast received wirelessly or by wire through radio waves or a cable, and demodulates the tuned broadcast.

The broadcast processor 120 performs signal processing with respect to the broadcast signal output from the broadcast signal receiver 110. The broadcast processor 120 functioning as described above comprises a broadcast signal separator 121, an audio decoder 123, an audio processor 125, a video decoder 127 and a video processor 129.

The broadcast signal separator 121 separates the broadcast signal output from the broadcast signal receiver 110 into a video signal, an audio signal and additional data, and outputs the separated signals and data. The audio signal and the video signal separated from the broadcast signal are transferred to the audio decoder 123 and the video decoder 127, respectively, in order to provide a digital broadcast program to a user. The additional data separated from the broadcast signal is transferred to the controller 150. The additional data may be program and system information protocol (PSIP) information.

The audio decoder 123 decodes the audio signal output from the broadcast signal separator 121. Accordingly, the audio decoder 123 may output the decompressed audio signal.

The audio processor 125 converts the decoded audio signal output from the audio decoder 123 into an audio signal of a format suitable for being played through a speaker included in the DTV 100.

The video decoder 127 decodes the video signal output from the broadcast signal separator 121, so that the decoded video signal can be output.

The video processor 129 converts the decoded video signal output from the video decoder 127 into a video signal of a format suitable for being displayed on a display of the DTV 100. In order to achieve a format suitable for displaying video, the video processor 129 performs color signal processing and scaling with respect to the decoded video signal.

The GUI generator 160 generates a GUI to be displayed on the display under control of the controller 150. The GUI generated by the GUI generator 160 may be display information displayed on the display to provide a user with an interface for the DTV 100. The GUI comprises a means for receiving user commands, such as a menu screen, and a means for informing the operating state of the DTV 100.

The GUI generated by the GUI generator 160 is transferred to the video processor 129, and is then added to video to be displayed on the display.

The broadcast output unit 130 outputs video and audio corresponding to the video signal and the audio signal output from the broadcast processor 120, and provides a user with the video and audio. The broadcast output unit 130 comprises an audio output unit 131 and a video output unit 135.

The audio output unit 131 outputs the audio signal transmitted from the audio processor 125 through the speaker. The video output unit 135 outputs the video signal transmitted from the video processor 129 on the display.

The remote controller receiver 140 transfers user commands received from the remote controller 200 to the controller 150. The controller 150 controls the entire operation of the DTV 100 in response to the user commands received from the remote controller receiver 140. Specifically, the controller 150 controls the broadcast receiver 110, broadcast processor 120 and broadcast output unit 130 so that the broadcast program selected by the user may be received and output.

Additionally, the controller 150 controls the GUI generator 160 to generate a menu screen through which a user may input operation commands using the remote controller 200, and to provide the user with the generated menu screen on the display.

In this situation, the shape of the menu screen provided to the user may be consistent with that of the remote controller 200.

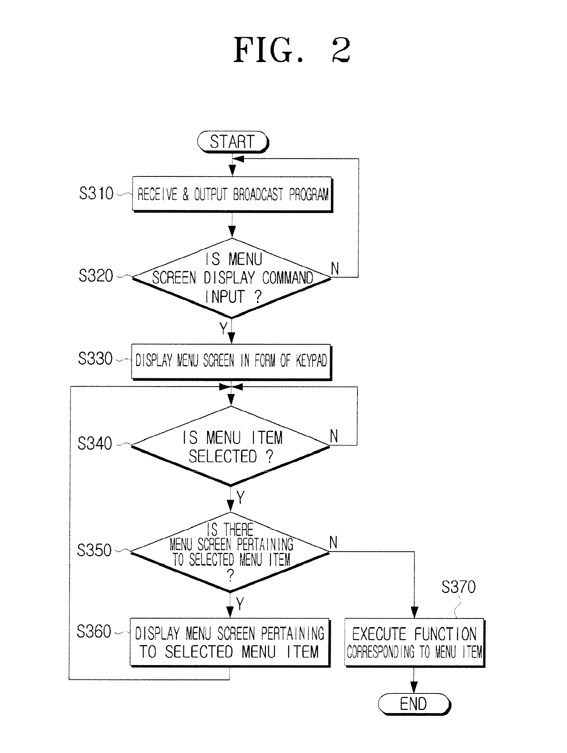

Hereinafter, a process by which the DTV 100 provides a menu screen as a GUI for the user on the display may be described in detail with reference to FIG. 2. FIG. 2 is a flowchart showing a method for providing a menu screen having a shape consistent with the remote controller 200, according to an exemplary embodiment of the present invention.

As shown in FIG. 2, the DTV 100 receives and outputs a broadcast program in order to provide the user with the broadcast program (operation S310). Specifically, in operation S310, the broadcast processor 120 processes the broadcast program received by the broadcast receiver 110, and the broadcast output unit 130 outputs the broadcast program processed by the broadcast processor 120.

If a user inputs a "menu screen display command" during operation S310 (operation S320-Y), the controller 150 may control the GUI generator 160 to display the menu screen (operation S330).

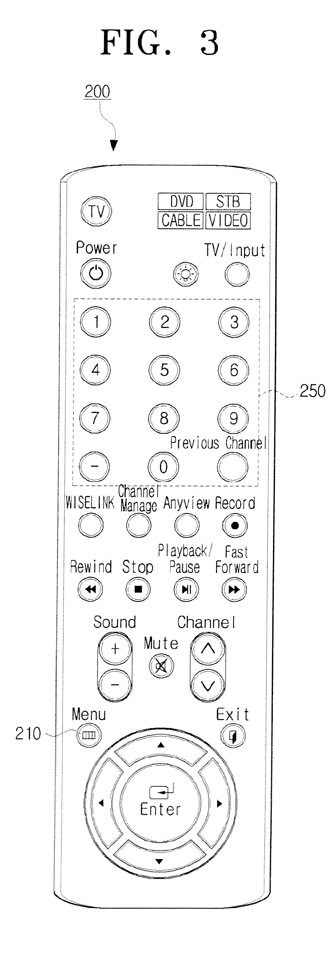

FIG. 3 shows in detail the remote controller 200 shown in FIG. 1. In operation S320, the user may input the menu screen display command by pressing a menu key 210 placed on the remote controller 200.

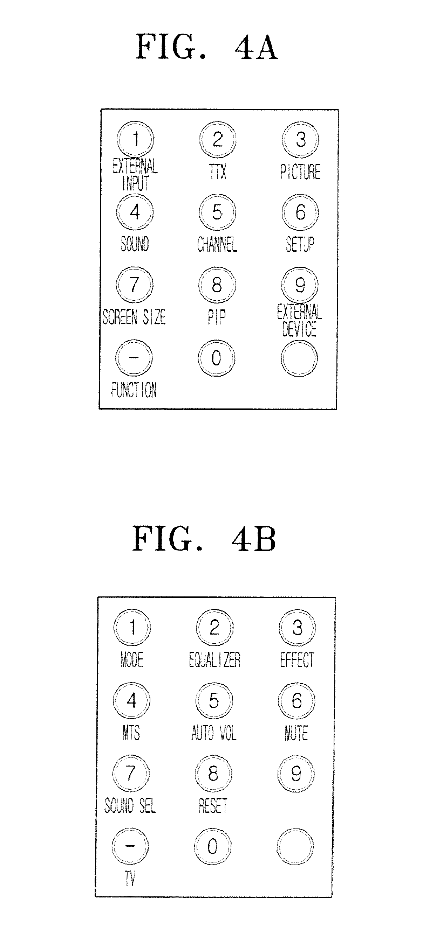

FIG. 4A shows the menu screen displayed in operation S330. The menu screen may be shaped in the form of a keypad, as shown in FIG. 4A. Referring to FIGS. 3 and 4A, the shape of the menu screen of FIG. 4A is consistent with that of a number keypad 250 of the remote controller 200 shown in FIG. 3.

Accordingly, keys on the number keypad 250 of the remote controller 200, for example "①", "②", "③" or other number keys, are also displayed on the menu screen shown in FIG. 4A. Additionally, items indicating menu items, for example "External Input", "TTX", "PICTURE" or the like, are displayed below the keys.

The user may press the keys, for example "①", "②", "③" or other number keys, using the remote controller 200, to select the menu items, for example "External Input", "TTX", "PICTURE" or the like, each corresponding to a pressed key. For example, if the user presses "④" using the remote controller 200, the menu item corresponding to "④", namely "SOUND", may be selected.

Additionally, there may be keys for which no items are given among the keys appearing on the menu screen, for example "⊚" key and "○ " key, as shown in FIG. 4A. Even if the user presses the "⊚" key or the "○ " key, there is no change, because menu screens or functions corresponding to those keys are not present.

No text printed on the remote controller 200 except for those associated with the keys on the keypad, is displayed on the menu screen. For example, as shown in FIG. 3, "Previous Channel" on the number keypad 250 is not displayed on the menu screen of FIG. 4A. This is because this is only used when the user manually inputs operation commands using the remote controller 200, but is not required when the user selects the menu item from the menu screen.

After operation S330, if the user selects a desired menu item on the menu screen (operation S340-Y), the controller 150 may determine whether there is a menu screen pertaining to the selected menu item (operation S350).

If it is determined that there is a menu screen pertaining to the selected menu item (operation S350-Y), the controller 150 may control the GUI generator 160 to display the menu screen pertaining to the selected menu item (operation S360).

FIG. 4B shows a menu screen pertaining to "SOUND" displayed in operation S360 when the user selects "SOUND" on the menu screen shown in FIG. 4A and when there is a menu screen pertaining to "SOUND".

The menu screen of FIG. 4B is a lower level menu screen that is lower than the menu screen of FIG. 4A. In other words, the menu screen of FIG. 4A is a higher level menu screen than the menu screen of FIG. 4B.

As shown in FIGS. 4A and 4B, the higher level menu screen and the lower level menu screen have the same shape, which is consistent with that of the number keypad 250 of the remote controller 200 shown in FIG. 3.

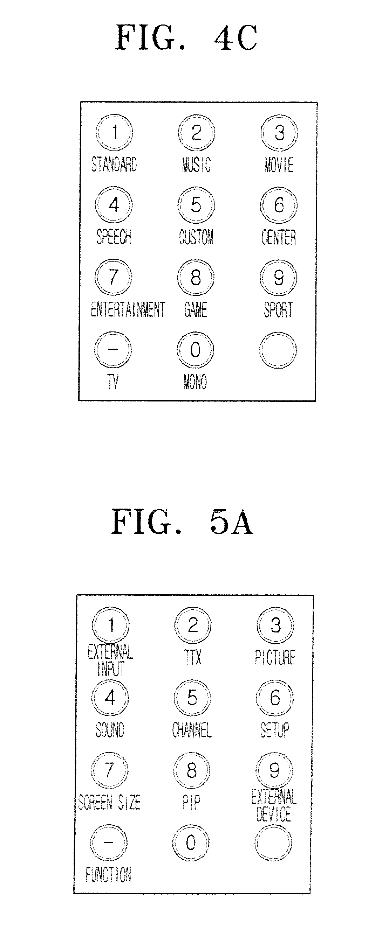

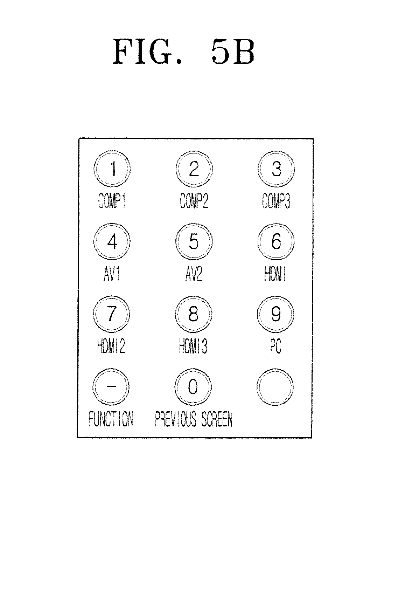

FIG. 5B shows a menu screen pertaining to "External Input", which is displayed in operation S360 when the user selects "External Input" on the menu screen shown in FIG. 5A identical to the menu screen shown in FIG. 4A, and when there is a menu screen pertaining to "External Input".

The menu screen of FIG. 5B is a lower level menu screen than the menu screen of FIG. 5A. In other words, the menu screen of FIG. 5A is a higher level menu screen than the menu of FIG. 5B.

As shown in FIGS. 5A and 5B, the higher level menu screen and the lower level menu screen have the same shape, which is consistent with that of the number keypad 250 of the remote controller 200 shown in FIG. 3.

After operation S360, this process may be repeated from operation S340. For example, if the user selects "MODE" on the menu screen shown in FIG. 4B displayed at operation S360, and if it is determined that there is a menu screen pertaining to "MODE", the menu screen pertaining to "MODE" may be displayed as shown in FIG. 4C.

The menu screen of FIG. 4C is a lower level menu screen than the menu screen of FIG. 4B. In other words, the menu screen of FIG. 4B is a higher level menu screen than the menu screen of FIG. 4C.

As shown in FIGS. 4B and 4C, the higher level menu screen and the lower level menu screen have the same shape, which is consistent with that of the number keypad 250 of the remote controller 200 shown in FIG. 3.

If it is determined that there is no menu screen pertaining to the selected menu item (operation S350-N), the controller 150 may execute a function corresponding to the selected menu item (operation S370). For example, if the user selects "MOVIE" on the menu screen shown in FIG. 4C, and if it is determined that there is no menu screen pertaining to "MOVIE", the controller 150 may execute a function corresponding to the selected "MOVIE" item. Specifically, the controller 150 may control the audio processor 125 so that the audio output by the audio output unit 131 may be output in MOVIE mode.

The process by which the DTV 100 provides the menu screen having a shape consistent with the remote controller 200 was explained in detail above, in accordance with the exemplary embodiment of the present invention.

Although both the higher level menu screen and lower level menu screen are both similarly shaped in the form of the keypad in the exemplary embodiment of the present invention, the present invention is also applicable to a situation in which the menu screens are different in shape, even though both the higher level menu screen and lower level menu screen are shaped in the form of the keypad.

Additionally, in order to facilitate understanding of the present invention, the shape of the menu screen is consistent with the keypad on the remote controller 200 used as a remote control device in the exemplary embodiment of the present invention, but the present invention is not limited thereto. Accordingly, the shape of the menu screen may be consistent with a keypad placed on a main body of the DTV 100.

Furthermore, although a video apparatus to which the present invention is applicable is constituted by the DTV 100 in order to facilitate understanding of the present invention, the present invention is applicable to other video apparatuses instead of the DTV 100. Besides the DTV 100, video apparatuses may be implemented as a set-top box (STB) or a digital multimedia broadcasting (DMB) receiving apparatus, or may be implemented as any of various portable devices, such as a mobile phone, a navigation device or a personal multimedia player (PMP).

Moreover, a shape of a menu screen in a portable device including a keypad, such as a mobile phone, may be consistent with the keypad.

In addition, the menu items on the menu screen are displayed below the corresponding keys in the exemplary embodiment of the present invention, but the present invention is applicable to a situation in which the menu items are displayed above the corresponding keys or in other positions on the menu screen.

Although the shape of the menu screen is consistent with that of the keypad 250 of the remote controller in the exemplary embodiment of the present invention, the shape of the menu screen may also be consistent with that of a keypad comprising keys other than the number keypad 250, for example, a keypad comprising a "WISELINK" key, "Channel Manage" key, "Anyview" key, "Record" key, "Rewind" key, "Stop" key, "Playback/Pause" key, and "Fast Forward" key.

Additionally, the higher level menu screen and lower level menu screen in a master-slave relationship are consistent in shape according to the exemplary embodiment of the present invention, but the present invention is applicable to a situation in which menu screens not having such a relationship are consistent with each other. For example, even when a playback-related menu screen and a recording-related menu screen are in a horizontal relationship, the menu screens may be consistent with each other.

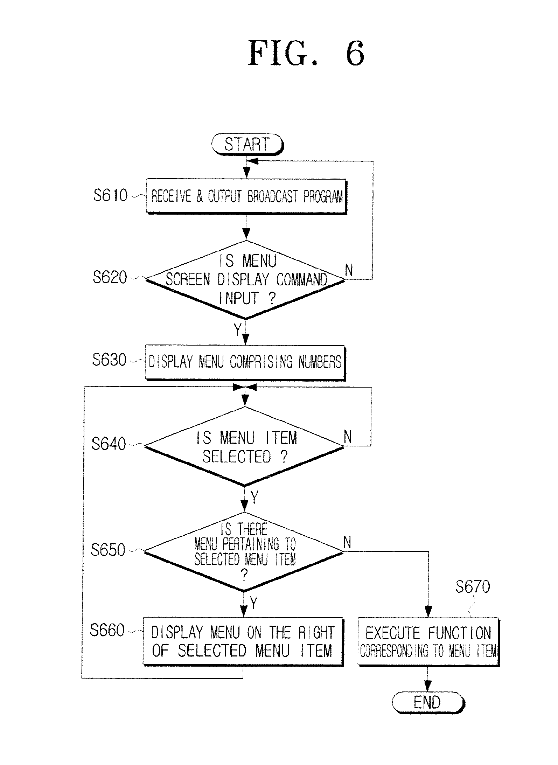

Hereinafter, another exemplary embodiment of the present invention will be described in detail with reference to FIG. 6. FIG. 6 is a flowchart showing a method for providing a menu screen, according to another exemplary embodiment of the present invention.

In FIG. 6, the DTV 100 receives and outputs a broadcast program to provide the user with the broadcast program (operation S610). Specifically, in operation S610, the broadcast processor 120 processes the broadcast program received by the broadcast receiver 110, and the broadcast output unit 130 outputs the broadcast program processed by the broadcast processor 120.

If a user inputs a "menu screen display command" during operation S610 (operation S620-Y), the controller 150 may control the GUI generator 160 to display a menu on which numbers appear (operation S630).

In operation S620, the user may input the menu screen display command by pressing the menu key 210 placed on the remote controller 200.

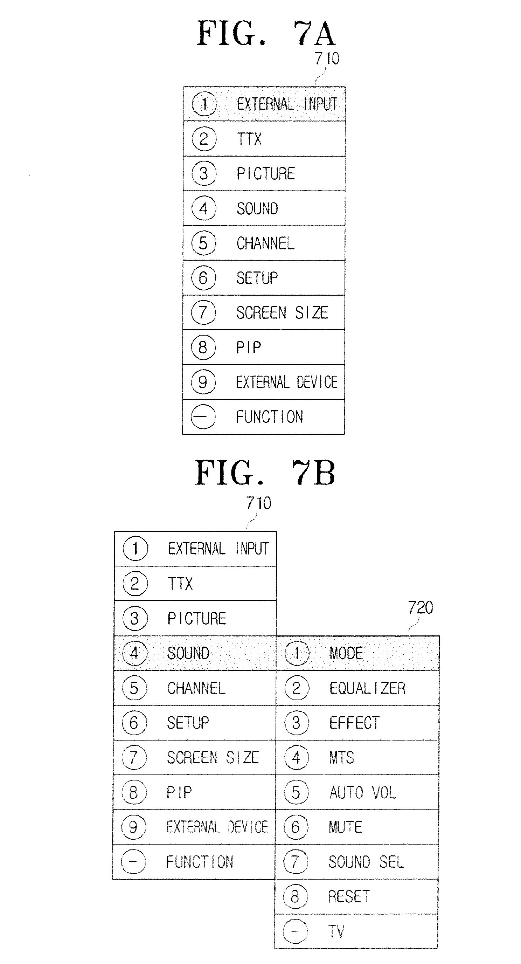

FIG. 7A shows the menu screen displayed in operation S630. As shown in FIG. 7A, keys on the number keypad 250 of the remote controller 200, for example "①", "②", "③" or other number keys, are displayed on a first menu 710. Additionally, items indicating menu items, for example "External Input", "TTX", "PICTURE" or the like, are displayed to the right of each of the keys on the number keypad 250.

Therefore, the user may press the keys, for example "①", "②", "③" or other number keys, using the remote controller 200, to select the menu items, for example "External Input", "TTX", "PICTURE" or the like, each corresponding to a pressed key. For example, if the user presses "④" using the remote controller 200, a menu item corresponding to "④", namely "SOUND", may be selected.

Additionally, there may be keys for which no items are given among the keys appearing on the menu screen, for example "⊚" key and "○" key. The "⊚" key or "○ " key is not displayed on the first menu 710.

After operation S630, if the user selects a desired menu item from the first menu 710 (operation S640-Y), the controller 150 may determine whether there is a menu pertaining to the selected menu item (operation S650).

If it is determined that there is a menu pertaining to the selected menu item (operation S650-Y), the controller 150 may control the GUI generator 160 so that the menu pertaining to the selected menu item may be displayed to the right of the selected menu item (operation S660).

FIG. 7B shows a menu screen pertaining to "SOUND" displayed when the user selects "SOUND" from the first menu 710 shown in FIG. 7A and when there is a menu pertaining to "SOUND".

The menu screen of FIG. 7B comprises the first menu 710 and a second menu 720, that is, the menu pertaining to "SOUND". The keys on the number keypad 250 of the remote controller 200, for example "①", "②", "③" or other number keys, are also displayed on the second menu 720, in the same manner as the first menu 710. Additionally, items indicating menu items, for example "MODE", "EQUALIZER", "EFFECT", etc., are displayed to the right of each of the keys on the number keypad 250.

As shown in FIG. 7B, the first menu 710 and the second menu 720 are displayed on a single screen, and are arranged horizontally. Specifically, the second menu 720, namely, the lower level menu, is placed to the right of the first menu 710, which is the higher level menu.

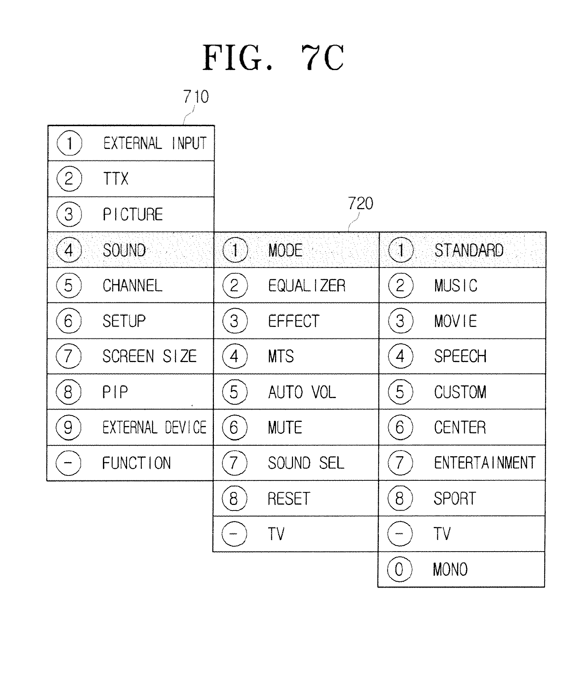

After operation S660, this process may be repeated from operation S640. For example, if the user selects "MODE" on the menu screen shown in FIG. 7B, and if it is determined that there is a menu pertaining to "MODE", a menu screen displayed in operation S660 may be displayed as shown in FIG. 7C.

The menu screen of FIG. 7C comprises not only the first menu 710 and the second menu 720, but also a third menu 730, that is, the menu pertaining to "MODE". In the same manner as the first menu 710 and the second menu 720, the keys on the number keypad 250 of the remote controller 200 and menu items corresponding to the keys are also displayed on the third menu 730.

As shown in FIG. 7C, the first menu 710, the second menu 720 and the third menu 730 are displayed on a single screen, and are arranged horizontally. Specifically, the first menu 710 and the second menu 720, which are higher level menus, are placed to the left of the third menu 730, which is a lower level menu.

If it is determined that there is no menu pertaining to the selected menu item (operation S650-N), the controller 150 may execute a function corresponding to the selected menu item (operation S670). For example, if the user selects "MOVIE" on the menu screen shown in FIG. 7C, and if it is determined that there is no menu pertaining to "MOVIE", the controller 150 may execute a function corresponding to the selected "MOVIE" item. Specifically, the controller 150 may control the audio processor 125 so that the audio output by the audio output unit 131 may be output in MOVIE mode.

Although the menu screen comprises a plurality of menus and lower level menus are placed to the right of higher level menus in this exemplary embodiment of the present invention, the present invention is applicable to a situation in which the lower level menus may be displayed below the higher level menus.

As described above, according to the exemplary embodiments of the present invention, the user may operate the GUI more intuitively. Additionally, the user may use the GUI more easily and more conveniently without needing to search menus by moving a cursor.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a graphical user interface (GUI), the method comprising:
generating a higher level menu screen comprising a first keypad; and
generating a lower level menu screen pertaining to the higher level menu screen, the lower level menu comprising a second keypad.

2. The method as claimed in claim 1, wherein a form of the second keypad is consistent with a form of the first keypad.

3. The method as claimed in claim 2, wherein the form of the first keypad and the form of the second keypad are consistent with one of a keypad on a remote control device (200) related to a video apparatus (100) which provides the higher level menu screen and the lower level menu screen, and a keypad on the video apparatus (100).

4. The method as claimed in claim 1, wherein the first keypad comprises keys and higher level menu items corresponding to the keys,
the higher level menu items are displayed adjacent to the corresponding keys,
the second keypad comprises the keys and lower level menu items corresponding to the keys, and
the lower level menu items are displayed adjacent to the corresponding keys.

5. The method as claimed in claim 4, wherein the keys comprise number keys.

6. The method as claimed in claim 1, wherein the higher level menu screen comprises higher level menu items corresponding to only a portion of the keys displayed on the first keypad.

7. A video apparatus comprising:
a graphical user interface (GUI) generator (160) which generates a menu screen to be combined with video and displayed on a display; and
a controller (150) which controls the GUI generator (160) to generate a higher level menu screen comprising a first keypad and to generate a lower level menu screen pertaining to the higher level menu screen comprising a second keypad.

8. The video apparatus as claimed in claim 7, wherein a form of the second keypad is consistent with a form of the first keypad.

9. The video apparatus as claimed in claim 8, wherein the form of the first keypad and the form of the second keypad are consistent with one of a keypad on a remote control device (200) related to the video apparatus (100), and a keypad on the video apparatus (100).

10. The video apparatus as claimed in claim 7, wherein the first keypad comprises keys and higher level menu items corresponding to the keys,
the higher level menu items are displayed adjacent to the corresponding keys,
the second keypad comprises the keys and lower level menu items corresponding to the keys, and
the lower level menu items are displayed adjacent to the corresponding keys.

11. The video apparatus as claimed in claim 10, wherein the keys comprise number keys, and
the video apparatus (100) comprises a broadcast receiving apparatus (110) which receives a broadcast to provide a user with the received broadcast.

12. The video apparatus as claimed in claim 7, wherein the higher level menu screen comprises higher level menu items corresponding to only a portion of the keys displayed on the first keypad.

13. A method for providing a graphical user interface (GUI), the method comprising:
generating a menu screen comprising a keypad comprising keys and menu items corresponding to the keys, the menu items being displayed adjacent to the corresponding keys; and
combining the menu screen with video to be displayed on a display.

14. The method as claimed in claim 13, wherein a form of the keypad is consistent with one of a keypad on a remote control device (200) related to a video apparatus (100) which provides a user with the menu screen, and a keypad on the video apparatus (100).

15. The method as claimed in claim 13, wherein a form of the keypad is consistent with a keypad on a remote control device (200) related to a video apparatus (100) which provides a user with the menu screen, and
no text printed on the remote control device (200), except for those associated with the keys on the keypad, is displayed on the menu screen.

16. The method as claimed in claim 13, wherein a form of the keypad is consistent with a keypad on a remote control device (200) related to a video apparatus (100) which provides a user with the menu screen, and
the keys displayed on the menu screen are a portion of the keys on the remote control device (200).

17. A video apparatus comprising:
a graphical user interface (GUI) generator (160) which generates a menu screen to be combined with video and displayed on a display; and
a controller (150) which controls the GUI generator (160) to generate a menu screen,
wherein the menu screen comprises a keypad comprising keys and menu items corresponding to the keys, and the menu items are displayed adjacent to the corresponding keys.

18. The video apparatus as claimed in claim 17, wherein a form of the keypad is consistent with one of a keypad on a remote control device (200) related to the video apparatus (100), and a keypad on the video apparatus (100).

19. The video apparatus as claimed in claim 17, wherein a form of the keypad is consistent with a keypad on a remote control device (200) related to the video apparatus (100), and
no text printed on the remote control device (200), except for those associated with the keys on the keypad, is displayed on the menu screen.

20. The video apparatus as claimed in claim 17, wherein a form of the keypad is consistent with a keypad on a remote control device (200) related to the video apparatus (100),
the keys displayed on the menu screen comprise a portion of the keys on the remote control device (200), and
the video apparatus (100) is a broadcast receiving apparatus (110) which receives a broadcast to provide a user with the received broadcast.

21. A method for providing a graphical user interface (GUI), the method comprising:
displaying a first menu (710) comprising numbers and menu items corresponding to the numbers; and
if a predetermined number is input, selecting a menu item corresponding to the input number.

22. The method as claimed in claim 21, wherein the selecting further comprises displaying a second menu (720) pertaining to the selected menu item corresponding to the input number, around the first menu (710).

23. The method as claimed in claim 22, wherein the second menu (720) comprises numbers and menu items corresponding to the numbers.

24. The method as claimed in claim 22, wherein the second menu (720) is displayed to the right of the first menu (710).
